# EUROPEAN PATENT APPLICATION

(11) **EP 4 851 481 A1**
(43) Date of publication of application: **09.12.2026**
(21) Application number: 25747633.3
(22) Date of filing: 21.01.2025
(51) Int. Cl.: F16D 65/12, F16D 65/847

(54) **BRAKE DISC AND MANUFACTURING METHOD**

(30) Priority: 31.01.2024 CN 202410138119
(71) Applicant: Henan Valiant Braking System Corporation, Zhumadian, Henan 463200 (CN)
(72) Inventor: ZHOU, Ligang, Zhumadian, Henan 463200 (CN); GAO, Chao, Zhumadian, Henan 463200 (CN); CHEN, Huawei, Zhumadian, Henan 463200 (CN); JING, Juncheng, Zhumadian, Henan 463200 (CN)
(74) Representative: CAPRI
(86) International application number: PCT/CN2025/073588
(87) International publication number: WO 2025/162061

(57) **Abstract**

A brake disc, comprising: a disc body (10) and a connecting disc (20), wherein the disc body (10) comprises two disc surfaces (110) spaced apart from each other, the connecting disc (20) is of an annular disc configuration and is connected to the sides of the two disc surfaces (110) facing each other by means of metallurgical bonding, and the two disc surfaces (110) are fixedly connected to each other via a plurality of stand columns (30); a flange (40) fixedly connected to an inner ring of the connecting disc (20); and connecting claws (50) cast-formed on an outer wall of a petal-shaped fusion plate (210) in the circumferential direction of the connecting disc (20), wherein the connecting claw (50) and the disc body (10) are integrally cast and formed. By means of arranging the connecting disc (20) to connect the two disc surfaces (110) from a symmetrical plane of the two disc surfaces (110) of the disc body (10), and the flange (40) being fixed to the connecting disc (20), the two disc surfaces (110) can independently deform outwards to avoid excessive internal stress on a single side; a plurality of air ducts are provided by connecting the two disc surfaces via the stand columns (30) for heat dissipation; and the cast-formed connecting claws (50) are connected to the petal-shaped fusion plate (210) to form an integrated structure, thereby improving the structural strength, and prolonging the service life of the brake disc. Further disclosed is a method for manufacturing a brake disc.

## Description

The present application claims the priority to the Chinese Patent Application No. 202410138119.9, titled "BRAKE DISC AND MANUFACTURING METHOD", filed on January 31, 2024 with the China National Intellectual Property Administration, the entire contents of which are incorporated herein by reference.

### FIELD

The present application relates to the technical field of brake disc equipment, and in particular, to a brake disc and a manufacturing method therefor.

### BACKGROUND

A brake disc is a friction pair component on a disc brake, and rotates together with a wheel when a vehicle is traveling. When the vehicle brakes, a caliper clamps the brake disc for friction braking, slowing down or stopping the vehicle. Currently, commercial vehicle brake discs on the market are mainly made of gray cast iron. A connecting flange of a brake disc is directly connected to a friction surface on one side of a disc body. During braking of the brake disc, a large amount of heat is generated at the disc body, causing the disc body to undergo thermal expansion. During this process, the friction surface on the side of the disc body not provided with the connecting flange is free to expand, whereas the friction surface on the side provided with the connecting flange is restricted by the connecting flange during expansion, preventing free expansion. In the cooling stage after braking, the friction surfaces on both sides of the disc body contract inward. Repeated cycles cause a large internal stress in the friction surface on the side connected to the connecting flange, so that cracks are likely to occur, and in severe cases, the service life is affected.

Therefore, how to improve the service life of a brake disc is a technical issue that needs to be addressed by those skilled in the art.

### SUMMARY

In view of this, an object of the present application is to provide a brake disc having high structural strength and a long service life.

Another object of the present application is to provide a manufacturing method for manufacturing the above-mentioned brake disc.

To achieve the above objects, the following technical solutions are provided according to the present application.

A brake disc, includes:
a disc body and a connecting disc, where the disc body includes two disc faces arranged spaced apart, the connecting disc is in an annular disc configuration and is connected to mutually facing sides of the two disc faces by metallurgical bonding, and the two disc faces are fixedly connected by multiple pillars;
a flange, fixedly connected to an inner ring of the connecting disc; and
a connecting claw, formed by casting on an outer wall of a petal-shaped fusion plate along a circumferential direction of the connecting disc and encapsulating the fusion plate, where the connecting claw is integrally formed with the disc body by casting.

Preferably, in the above-mentioned brake disc, an extension width of a single connecting claw on a plane parallel to the disc face is defined as *b*_{z}, and a depth of the connecting claw is defined as *L_{z},* then *b_{z}* satisfies:
$\frac{πd}{2 n} \leq {b}_{z} \leq \frac{πd - 200}{n} ;$
*L_{z}* satisfies:
   $\frac{π \left({D}^{2}-{d}^{2}\right)}{40 {nb}_{z}} \leq {L}_{z} \leq \frac{3 π \left({D}^{2}-{d}^{2}\right)}{40 {nb}_{z}} ;$
where:
   *d* is an inner diameter of the disc body;
   *n* is a quantity of the fusion plates; and
   *D* is an outer diameter of the disc body.

Preferably, in the above-mentioned brake disc, a height coefficient of the connecting disc is *iₕ*, the height coefficient satisfies ${i}_{h} = \frac{H}{A + 30}$, and *iₕ* ≤ 1;
where:
*A* is a total width spacing between outer edges of the two disc faces; and
*H* is an axial height of the connecting disc.

Preferably, in the above-mentioned brake disc, a width of the fusion plate is defined as *bᵣ*, and a depth of the fusion plate inserted into the disc body is defined as *Lᵣ*, then *bᵣ* satisfies:
$\frac{πd}{2 n} - 20 \leq {b}_{r} \leq \frac{πd - 200}{n} - 20 ;$ and
*Lᵣ* satisfies:
$\frac{π \left({D}^{2}-{d}^{2}\right)}{40 n \left({b}_{r}+20\right)} - 10 \leq {L}_{r} \leq \frac{3 π \left({D}^{2}-{d}^{2}\right)}{40 n \left({b}_{r}+20\right)} - 10 .$

Preferably, in the above-mentioned brake disc, a single connecting claw has equal thicknesses on both sides in a width direction of a single fusion plate.

Preferably, in the above-mentioned brake disc, a configuration of the pillar after being sectioned in a direction of a plane parallel to the disc face is circular, elliptical, cashew-shaped, rhombic, or trapezoidal in shape.

Preferably, in the above-mentioned brake disc, the pillar is sequentially sectioned in a direction of a plane parallel to the disc face, and each section plane is equivalent to a circle having an equal area, a diameter of the circle having the smallest area is defined as *d*ₒ, and then *d*ₒ satisfies:
$\sqrt{\frac{{D}^{2} - {d}^{2}}{700} - 2.3} - 6 \leq {d}_{0} \leq \sqrt{\frac{{D}^{2} - {d}^{2}}{350} - 2.3} - 3 .$

Preferably, in the above-mentioned brake disc, the pillars are arranged circumferentially around a center of the connecting disc in two to six circles.

Preferably, in the above-mentioned brake disc, the connecting disc and the flange are made of Q355 or ZG230-450 material, and the disc body is made of HT200, HT250, or HT300 material.

A manufacturing method for producing the brake disc according to any one of the above-mentioned embodiments, where the manufacturing method includes at least following steps:
forging: heating a steel pipe to a temperature of 800°C to 950°C and forging the steel pipe to form the flange and the connecting disc;
mold placement: embedding the connecting disc into a brake disc core, assembling the brake disc core, and placing the brake disc core in a sand flask, where steel shots are laid in the sand flask;
casting the brake disc: pouring molten iron, after which resin in resin-coated sands of the core is burned and scrapped, and the connecting disc and the disc body are fused into an integral structure; and
welding: welding the flange and the connecting disc by lap welding, where a lap length is 5 mm to 20 mm, and performing reinforcing welding by submerged arc welding after press-fitting is completed.

It can be seen from the above technical solutions that the brake disc provided according to the present application includes the disc body, the connecting disc, the flange, and the connecting claw. The disc body includes two disc faces arranged spaced apart for friction braking, and the connecting disc is arranged between the two disc faces. The connecting disc is of an annular disc configuration and is connected to mutually facing sides of the two disc faces by metallurgical bonding. Meanwhile, to ensure structural stability, the two disc faces are fixedly connected by multiple pillars arranged spaced apart. The pillars enable all portions of the disc body to uniformly have connection points, and meanwhile form ventilation channels through gaps between the pillars, so that heat generated inside the disc body is discharged in time through the ventilation channels. The flange is fixedly connected to the inner ring of the connecting disc, that is, the flange is indirectly connected to the disc body, so as to avoid influence of the flange on expansion and contraction states of the two disc faces and improve the service life of the brake disc. Meanwhile, petal-shaped fusion plates are provided along the circumferential direction of the connecting disc, and the connecting claw is formed by casting on the outer wall of the fusion plate and encapsulates the fusion plate. The connecting claw is formed by being integrally formed with the disc body by casting, so as to stably connect the two disc faces and connect the disc faces over a larger area through an extension structure of the connecting claw based on the connecting disc, thereby enhancing the structural strength and service life of the brake disc. In the brake disc provided according to the present application, the two disc faces are connected by the connecting disc at a symmetrical plane position of the disc body, and meanwhile the disc body is indirectly connected to the flange through the connecting disc, so that both of the two disc faces are free to deform, thereby avoiding a relatively large internal stress generated in the disc body from affecting the service life of the brake disc. Meanwhile, multiple connecting claws are formed by casting on the outer wall in the circumferential direction of the connecting disc, so that the connecting claws stably connect the two disc faces by integral casting, and the pillars further improve the integrity of the brake disc, so as to improve the structural stability of the brake disc while allowing ventilation and heat dissipation through gaps between the pillars, thereby reducing the influence of a high-temperature environment on the service life of the brake disc.

### BRIEF DESCRIPTION OF THE DRAWINGS

To more clearly describe the technical solutions in embodiments of the present application or in the conventional technology, the drawings required for use in the description of the embodiments or the conventional technology will be briefly illustrated hereinafter. Obviously, the drawings in the following description are merely some embodiments of the present application, and those skilled in the art may obtain other drawings based on the provided drawings without any creative effort.
FIG. 1 is a schematic sectional structural view of a brake disc provided according to an embodiment of the present application;
FIG. 2 is a schematic top sectional structural view of a brake disc provided according to an embodiment of the present application; and
FIG. 3 is a schematic structural view showing an encapsulated state of a connecting claw provided according to an embodiment of the present application.

The reference numerals in the drawings are listed as follows:
10 disc body; 110 disc face; 20 connecting disc; 210 fusion plate; 30 pillar; 40 flange; 50 connecting claw.

### DETAILED DESCRIPTION OF THE EMBODIMENTS

An objective of the present application lies in disclosing a brake disc having high structural strength and a long service life.

Another objective of the present application lies in disclosing a manufacturing method for manufacturing the above-mentioned brake disc.

In order to enable those skilled in the art to better understand the solution of the present application, embodiments of the present application are described below with reference to the drawings. Moreover, the embodiments shown below do not limit the content of the present application recorded in the claims in any way. Furthermore, the entire contents of the configurations described in the following embodiments are not limited to those necessary for the solution of the present application recorded in the claims.

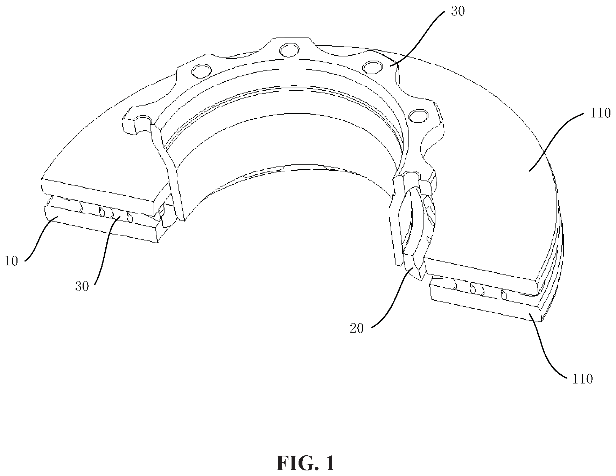

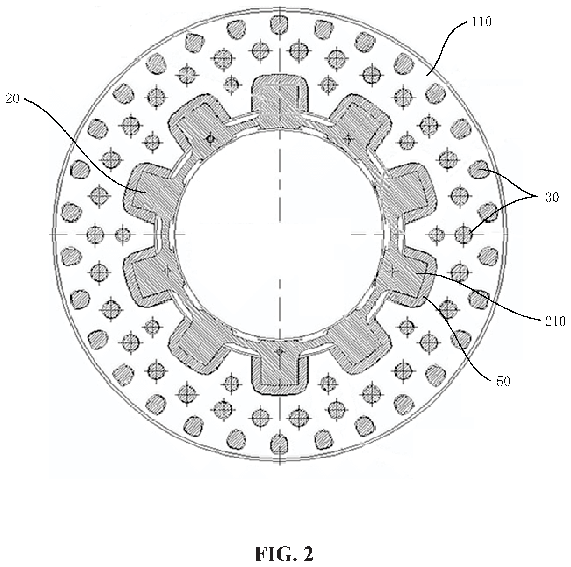

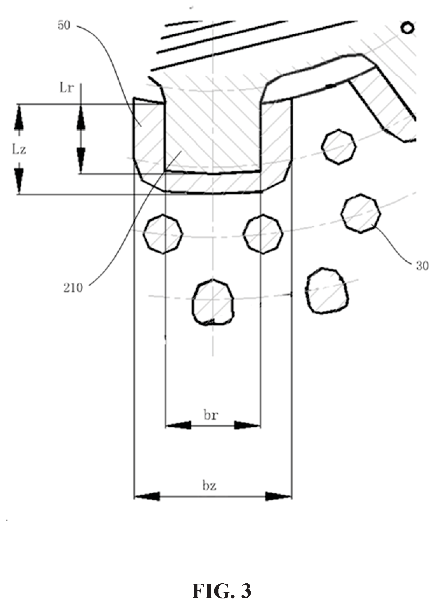

As shown in FIG. 1, FIG. 2, and FIG. 3, a brake disc provided according to an embodiment of the present application includes a disc body 10, a connecting disc 20, a flange 40, and a connecting claw 50. The disc body 10 includes two disc faces 110 arranged spaced apart for friction braking, and the connecting disc 20 is arranged between the two disc faces 110. The connecting disc 20 has an annular disc configuration and is connected to mutually facing sides of the two disc faces 110 by metallurgical bonding. In order to ensure structural stability, the two disc faces 110 are fixedly connected by multiple pillars 30 arranged spaced apart, and the pillars 30 enable connection points to be uniformly provided on the disc body 10 while forming ventilation channels through gaps between the pillars 30, so that heat generated in the disc body 10 is dissipated in time through the ventilation channels.

The flange 40 is fixedly connected to an inner ring position of the connecting disc 20, that is, the flange 40 is indirectly connected to the disc body 10. Since the flange 40 is connected to the disc body 10 through the connecting disc 20, the connecting disc 20 is arranged at a central position between the two disc faces 110 on the disc body 10, so that expansion and contraction states of the two disc faces 110 are the same and are unrelated to the arrangement structure of the flange 40, thereby improving the service life of the brake disc. Meanwhile, the connecting disc 20 is provided with a petal-shaped fusion plate 210 along its circumferential direction, and the connecting claw 50 is formed by casting on an outer wall of the fusion plate 210 and is arranged to encapsulate the fusion plate 210. The connecting claw 50 is formed integrally with the disc body 10 by casting, so as to stably connect the two disc faces 110 and connect the disc faces 110 over a larger area through an extension structure thereof based on the connecting disc 20, thereby enhancing the structural strength and service life of the brake disc.

In the brake disc provided according to the embodiment of the present application, the two disc faces 110 are connected through the connecting disc 20 which is located at symmetry positions of the disc body 10, and meanwhile the disc body 10 is indirectly connected to the flange 40 through the connecting disc 20, so that the two disc faces 110 are free to deform, thereby avoiding generation of relatively large internal stress in the disc body 10 that affects the service life of the brake disc. Meanwhile, multiple connecting claws 50 are formed by casting on the outer wall of the connecting disc 20 in the circumferential direction, so that the connecting claws 50 stably connect the two disc faces 110 by integral casting, and the integrity of the brake disc is then improved through the pillars 30, so that while structural stability of the brake disc is improved, gaps between the pillars 30 provide ventilation and heat dissipation, reducing influence of a high-temperature environment on the service life of the brake disc.

It should be noted that, compared with a conventional brake disc, the brake disc provided according to the embodiment of the present application is provided with ventilation channels for heat dissipation in two directions, that is, heat generated in the disc body 10 may be dissipated outward along an outer circle of the disc face 110 through the multiple pillars 30 arranged spaced apart, and may also be dissipated inward along an inner circle of the disc face 110 toward the flange 40.

Further, in the brake disc provided according to the embodiment of the present application, the flange 40 of the brake disc is connected to a wheel hub and rotates together with a wheel. During braking of the brake disc, torque generated by friction between the disc face 110 and a brake pad is entirely borne by the connecting claw 50 and the fusion plate 210. Therefore, in order to ensure the structural strength of the disc body 10 during braking, the connecting claw 50 and the fusion plate 210 are required to have a certain width and thickness. Here, a width over which a single connecting claw 50 extends on a plane parallel to the disc face 110 is defined as *b*_{z}*,* which represents a connection area between the connecting claw 50 and the disc body 10, and a depth of the single connecting claw 50 is defined as *L*_{z}, with *b_{z}* and *L_{z}* satisfying:
$\frac{πd}{2 n} \leq {b}_{z} \leq \frac{πd - 200}{n} ;$
$\frac{π \left({D}^{2}-{d}^{2}\right)}{40 {nb}_{z}} \leq {L}_{z} \leq \frac{3 π \left({D}^{2}-{d}^{2}\right)}{40 {nb}_{z}} ;$
where:
*d* is an inner diameter of the disc body 10;
*n* is a quantity of the fusion plates 210; and
*D* is an outer diameter of the disc body 10.

In the above embodiment, *b_{z}* within a corresponding interval may satisfy a basic connection strength requirement and may not affect heat dissipation due to an excessively large width. It should be noted that the purpose of limiting a value range of *L_{z}* is that, if *L_{z}* is too small, the depth by which the fusion plate 210 is inserted into the disc body 10 may be too shallow, stress received at the position of the connecting claw 50 on the disc body 10 during braking is large, and the relatively shallow connection depth may cause insufficient strength of the connecting claw 50 and lead to crack failure. If *L_{z}* is too large, the depth by which the fusion plate 210 is inserted into the disc body 10 may be too deep, and for a brake disc with determined specifications, the inner diameter and the outer diameter of the disc face 110 are fixed, and an excessively large *L_{z}* may occupy space on the disc face 110 for arranging the pillars 30. If the quantity or cross-sectional area of the pillars 30 is not reduced, heat dissipation performance of the ventilation channels between the two disc faces 110 may be compromised, that is, the ventilation channels may become very narrow and ventilation and heat dissipation may be unsmooth; and if the quantity or cross-sectional area of the pillars 30 is reduced, although the connecting claw 50 is very robust, the pillars 30 between the two disc faces 110 may become the weakest positions, affecting the strength of the brake disc, and under the action of a strong friction force, the pillars 30 may break, causing serious safety hazards. Moreover, if the cross-sectional area of the pillars 30 is too small, it is also not conducive to implementation of a casting process and defects such as looseness and shrinkage cavities are easily formed.

Further, in a specific embodiment of the present application, a height coefficient of the connecting disc 20 is *i_{h,}* the height coefficient satisfies ${i}_{h} = \frac{H}{A + 30}$, and *iₕ* ≤ 1,
where:
*A* is a total width spacing between the two disc faces 110; and
*H* is an axial height of the connecting disc 20.

It should be noted that, if the height of the connecting disc 20 is excessively high, casting is inconvenient and stack molding casting cannot be performed, which affects production efficiency, while *iₕ* ≤ 1 may improve production efficiency through stack molding casting.

In order to further optimize the above technical solution, in the brake disc provided according to the embodiment of the present application, a width *bᵣ* of the fusion plate 210 satisfies:
$\frac{πd}{2 n} - 20 \leq {b}_{r} \leq \frac{πd - 200}{n} - 20 ,$ that is, the width of the connecting claw 50 is 20 mm greater than the width of the corresponding fusion plate 210. On the basis of this embodiment, it is preferable that thicknesses of a single connecting claw 50 on both sides in the width direction of the corresponding fusion plate 210 are equal, that is, a thickness of the connecting claw 50 encapsulated on a single side of the fusion plate 210 is 10 mm, so that the encapsulating effect of the connecting claw 50 is more uniform, and the two sides of the fusion plate 210 have the same ventilation space, ensuring balanced heat dissipation effects on the two sides.

The depth *Lᵣ* by which the fusion plate 210 is inserted into the disc body 10 satisfies:
$\frac{π \left({D}^{2}-{d}^{2}\right)}{40 n \left({b}_{r}+20\right)} - 10 \leq {L}_{r} \leq \frac{3 π \left({D}^{2}-{d}^{2}\right)}{40 n \left({b}_{r}+20\right)} - 10 .$

It should be noted here that *Lᵣ* within a corresponding interval is intended to satisfy a connection depth requirement, and when within the corresponding interval, the area of the connecting claw 50 accounts for 10% to 30% of the total area of the disc body 10, so as to satisfy a connection strength requirement, avoid wasting materials, and provide sufficient ventilation channel space for heat dissipation.

Further, in the brake disc provided according to the embodiment of the present application, a configuration of the pillar 30 after being sectioned in the direction of a plane parallel to the disc face 110 may be a circular, elliptical, cashew-shaped, rhombic, trapezoidal, or other configuration.

On the basis of the above embodiment, the pillar 30 is sequentially sectioned along a direction of a plane parallel to the disc face 110, and each section plane is equivalent to a circle having an equal area. A diameter of the circle having the smallest area is defined as *d*ₒ, and *d*ₒ satisfies:
$\sqrt{\frac{{D}^{2} - {d}^{2}}{700} - 2.3} - 6 \leq {d}_{0} \leq \sqrt{\frac{{D}^{2} - {d}^{2}}{350} - 2.3} - 3 .$

Here, the equivalent diameter at the position of the minimum cross-sectional area on the pillar 30 is limited. If *d*ₒ is too small, the pillars 30 between the two disc faces 110 may become the weakest positions, affecting the strength of the brake disc; and if *d*ₒ is too large, gaps between the pillars 30 may be affected, causing the ventilation channels to become very narrow and ventilation to be unsmooth.

Further, in the brake disc provided according to the embodiment of the present application, the pillars 30 are arranged circumferentially around a center of the connecting disc 20 in two to six circles. Specifically, when a single-side thickness of the disc body 10 in any radial direction is between 70 mm and 100 mm, the pillars 30 are arranged in two to four circles, and when the single-side thickness of the disc body 10 in any radial direction is greater than 100 mm, the pillars 30 are arranged in five to six circles.

Further, the brake disc provided according to the embodiment of the present application is a bimetal composite brake disc. Specifically, materials of the connecting disc 20 and the flange 40 are Q355 or ZG230-450. Taking Q355 as an example for description, Q355 has a yield strength of >=355 MPa, a tensile strength of 450 MPa to 630 MPa, and an elongation of >=21%. The flange 40 and the connecting disc 20 are made of Q355, which has high material strength and high yield strength, so that the flange 40 and the connecting disc 20 may resist relatively large external forces without failure. Meanwhile, Q355 has a high elongation and will not produce cracks or other defects during forging or stamping, is easy to produce and manufacture, and Q355 is readily available on the market and has a reasonable price. The material of the disc body 10 is HT200, HT250, or HT300, that is, a gray cast iron material is used. The above different materials enable the brake disc to have relatively strong structural strength while satisfying braking requirements of friction surfaces.

A manufacturing method is further provided according to an embodiment of the present application. The manufacturing method is used for manufacturing the brake disc provided in any one of the above embodiments, and the manufacturing method includes at least the following steps.

In S01, forging is carried out. A steel pipe is heated to 800 °C to 950 °C and is forged to produce the flange 40 and the connecting disc 20.

In S02, mold placement is carried out. The connecting disc 20 is embedded into a brake disc core, the brake disc core is assembled, and the brake disc core is placed in a sand flask, where steel shots are laid in the sand flask.

In S03, casting the brake disc is carried out. After pouring molten iron, resin in resin-coated sands of the core is burned and scrapped, and the connecting disc 20 and the disc body 10 are fused into an integral structure.

In S04, welding is carried out. The flange 40 and the connecting disc 20 are welded by lap welding, where a lap length is 5 mm to 20 mm, and reinforcing welding is performed by submerged arc welding after press-fitting is completed.

It should be noted that, in step S02, the steel shot having a thickness of at least 10 cm is also pressed on an upper portion of the brake disc core, so as to avoid flask swelling that causes the size of a blank to become larger.

It should be further noted that, in step S04, in order to improve concentricity between the flange 40 and the disc body 10, the flange 40 is in interference fit with the connecting disc 20 via its cylinder diameter, and before welding, the flange 40 should be pressed into the connecting disc 20 by a press machine to ensure a connection effect.

The terms "first," "second," "left side," "right side," and the like in the description and claims of the present application and in the above drawings are intended to distinguish different objects, rather than to describe a specific order. Moreover, the terms "including" and "having," and any variations thereof, are intended to cover non-exclusive inclusion. For example, a process, a method, a system, a product, or a device that includes a series of steps or units is not limited to the listed steps or units, and may include steps or units that are not listed.

The above description of the disclosed embodiments enables those skilled in the art to implement or use the present application. Various modifications to these embodiments will be apparent to those skilled in the art, and the general principles defined herein may be implemented in other embodiments without departing from the spirit or scope of the present application. Therefore, the present application is not to be limited to these embodiments shown herein, but should be in accordance with the broadest scope consistent with the principles and novel features disclosed herein.

## Claims

1. A brake disc, comprising:
a disc body (10) and a connecting disc (20), wherein the disc body (10) comprises two disc faces (110) arranged spaced apart, the connecting disc (20) is in an annular disc configuration and is connected to mutually facing sides of the two disc faces (110) by metallurgical bonding, and the two disc faces (110) are fixedly connected by a plurality of pillars (30);
a flange (40), fixedly connected to an inner ring of the connecting disc (20); and
a connecting claw (50), formed by casting on an outer wall of a petal-shaped fusion plate (210) along a circumferential direction of the connecting disc (20) and encapsulating the fusion plate (210), wherein the connecting claw (50) is integrally formed with the disc body (10) by casting.

2. The brake disc according to claim 1, wherein an extension width of a single connecting claw (50) on a plane parallel to the disc face (110) is defined as *b_{z}*, and a depth of the connecting claw (50) is defined as *L*_{z}, then *b*_{z} satisfies: $\frac{πd}{2 n} \leq {b}_{z} \leq \frac{πd - 200}{n} ;$
*L_{z}* satisfies: $\frac{π \left({D}^{2}-{d}^{2}\right)}{40 {nb}_{2}} \leq {L}_{2} \leq \frac{3 π \left({D}^{2}-{d}^{2}\right)}{40 {nb}_{2}} ;$
wherein:
*d* is an inner diameter of the disc body (10);
*n* is a number of the fusion plates (210); and
*D* is an outer diameter of the disc body (10).

3. The brake disc according to claim 1, wherein a height coefficient of the connecting disc (20) is *iₕ*, the height coefficient satisfies ${i}_{h} = \frac{H}{A + 30}$, and *iₕ* ≤ 1 ;
wherein:
*A* is a total width spacing between outer edges of the two disc faces (110); and
*H* is an axial height of the connecting disc (20).

4. The brake disc according to claim 2, wherein a width of the fusion plate (210) is defined as *bᵣ*, and a depth of the fusion plate (210) inserted into the disc body (10) is defined as *Lᵣ* , then *bᵣ* satisfies: $\frac{πd}{2 n} - 20 \leq {b}_{r} \leq \frac{πd - 200}{n} - 20 ;$ and
*Lᵣ* satisfies: $\frac{π \left({D}^{2}-{d}^{2}\right)}{40 n \left({b}_{r}+20\right)} - 10 \leq {L}_{r} \leq \frac{3 π \left({D}^{2}-{d}^{2}\right)}{40 n \left({b}_{r}+20\right)} - 10 .$

5. The brake disc according to claim 4, wherein a single connecting claw (50) has equal thicknesses on both sides in a width direction of a single fusion plate (210).

6. The brake disc according to claim 2, wherein a configuration of the pillar (30) after being sectioned in a direction of a plane parallel to the disc face (110) is circular, elliptical, cashew-shaped, rhombic, or trapezoidal in shape.

7. The brake disc according to claim 6, wherein the pillar (30) is sequentially sectioned in a direction of a plane parallel to the disc face (110), and each section area is nomalized to a circle having an equal area to the section area;
a diameter of the circle having the smallest area is defined as *d*ₒ, and then *d*ₒ satisfies: $\sqrt{\frac{{D}^{2} - {d}^{2}}{700} - 2.3} - 6 \leq {d}_{0} \leq \sqrt{\frac{{D}^{2} - {d}^{2}}{350} - 2.3} - 3 .$

8. The brake disc according to claim 6, wherein 2 to 6 circles of the pillars (30) are arranged circumferentially around a center of the connecting disc (20).

9. The brake disc according to claim 1, wherein the connecting disc (20) and the flange (40) are made of Q355 or ZG230-450 material, and the disc body (10) is made of HT200, HT250, or HT300 material.

10. A manufacturing method for producing the brake disc according to any one of claims 1 to 9, wherein the manufacturing method comprises at least following steps:
forging: heating a steel pipe to a temperature of 800°C to 950°C and forging the steel pipe to form the flange (40) and the connecting disc (20);
mold placement: embedding the connecting disc (20) into a brake disc core, assembling the brake disc core, and placing the brake disc core in a sand flask, wherein steel shots are laid in the sand flask;
casting the brake disc: pouring molten iron, after which resin in resin-coated sands of the core is burned and scrapped, and the connecting disc (20) and the disc body (10) are fused into an integral structure; and
welding: welding the flange (40) and the connecting disc (20) by lap welding, wherein a lap length is 5 mm to 20 mm, and performing reinforcing welding by submerged arc welding after press-fitting is completed.
